# EUROPÄISCHE PATENTSCHRIFT

(11) **EP 0 824 994 B1**
(45) Veröffentlichungstag und Bekanntmachung des Hinweises auf die Patenterteilung: **16.01.2002**
(21) Anmeldenummer: 97112498.7
(22) Anmeldetag: 22.07.1997
(51) Int. Cl.: B23Q 1/28

(54) **Feststellvorrichtung für eine Linearbewegungseinheit**
Clamping device for a linear moving unit
Dispositif de fixation pour une unité de mouvement linéaire

(30) Priorität: 23.08.1996 CH 207496
(43) Veröffentlichungstag der Anmeldung: 25.02.1998
(73) Patentinhaber: P W B AG, 9450 Alstätten (CH)
(72) Erfinder: Nemeth, Ference, 9434 Au (CH)
(74) Vertreter: Révy von Belvárd, Peter

(56) Entgegenhaltungen:
- EP-A- 0 452 702
- BE-A- 901 271
- US-A- 2 806 723

## Beschreibung

Die Erfindung bezieht sich auf eine Feststellvorrichtung für eine Linearbewegungseinheit nach dem Oberbegriff des Anspruches 1.

In verschiedenen Bereichen der Technik, insbesondere in Manipulatoren, werden Linearbewegungseinheiten eingesetzt. Diese Einheiten umfassen Linearführungen mit mindestens einer Führungsstange bzw. einem Führungsprofil und eine daran geführte Bewegungseinheit. Die Bewegungseinheit wird von einem Antrieb bewegt. Um die Bewegungseinheit an einer erreichten Position festzustellen, umfasst diese eine Feststellvorrichtung.

Aus der EP 452 702 B1 ist eine Feststellvorrichtung bekannt, bei der zwei Klemmglieder mit je einer Klemmöffnung für eine Führungsstange von einem Betätigungsglied in eine Klemmstellung verschwenkbar sind. Es hat sich nun gezeigt, dass eine noch in Bewegung befindliche Bewegungseinheit mit der bekannten Feststellvorrichtung nicht genügend schnell an der Führungsstange festgesetzt werden kann. Die erzielbare Klemmkraft scheint zu klein zu sein, so dass die Bewegungseinheit zu einer undefinierten Stellung weiterstottert.

Die Aufgabe der Erfindung besteht nun darin, eine Lösung zu finden, um ein genaues Festsetzen zu gewährleisten.

Die Lösung der Aufgabe gelingt durch die Verwirklichung der Merkmale des Anspruches 1.

Bei der Lösung der Aufgabe wurde erkannt, dass ein schnelles Festsetzen nicht mit einer vertretbaren Erhöhung der Klemmkraft erzielbar ist, sondern dass die Schwenkbewegung der Klemmglieder im wesentlichen spielfrei geführt sein muss. Das bei den bekannten Vorrichtungen beobachtete Weiterstottern wird durch das Spiel bei der Schwenkbewegung ermöglicht. Indem nun zum Führen der Schwenkbewegungen erste Führungsflächen der Klemmglieder mit zweiten Führungsflächen einer die Klemmglieder zumindest teilweise aufnehmenden Halterung im wesentlichen spielfrei zusammenwirken, führen die Klemmglieder Schwenkbewegungen um Schwenkachsen durch und das Festklemmen an der Führungsstange erfolgt ohne Stottern. Dabei ist für die Schwenkbewegung jedes Klemmgliedes mindestens eine in einer Schnittebene quer zur Schwenkachse gekrümmte Führungsfläche so vorgesehen, dass die einander zugeordneten ersten und zweiten Führungsflächen Schwenkbewegungen der Klemmglieder um definierte Schwenkachsen gewährleisten. Die Ausrichtung und Lage jeder Schwenkachse hängt von der Anordnung der Führungsflächen und von der Anordnung der Klemmöffnung bzw. der durch diese geführten Führungsstange ab. Für die spielfreie Führung ist nebst dem Führungskontakt zwischen den ersten und zweiten Führungsflächen auch ein Führungskontakt zwischen den Klemmgliedern vorgesehen. Die einander zugewandten Seiten der zwei Klemmglieder umfassen dritte Führungsflächen, die während der Schwenkbewegung direkt aneinander oder vorzugsweise an einem Zwischenteil, insbesondere einem fluchtend oder parallel zu den Schwenkachsen der Klemmglieder angeordneten Stift, anliegen.

Die Zeichnungen erläutern die Erfindung anhand schematisch dargestellter Beispiele.
- Fig. 1:: Längsschnitt durch eine an einer Führungsstange geführte Feststellvorrichtung, wobei die Klemmglieder und ein Betätigungs-Kolbenelement in zwei Stellungen dargestellt sind;
- Fig. 2:: Schwenkführung mit kugelteilförmigen Klemmgliedern;
- Fig. 3:: Schwenkführung mit quer zur Schwenkachse gekrümmter Führungsfläche der Halterung;
- Fig. 4:: Kugelgelenkartige Schwenkführung.

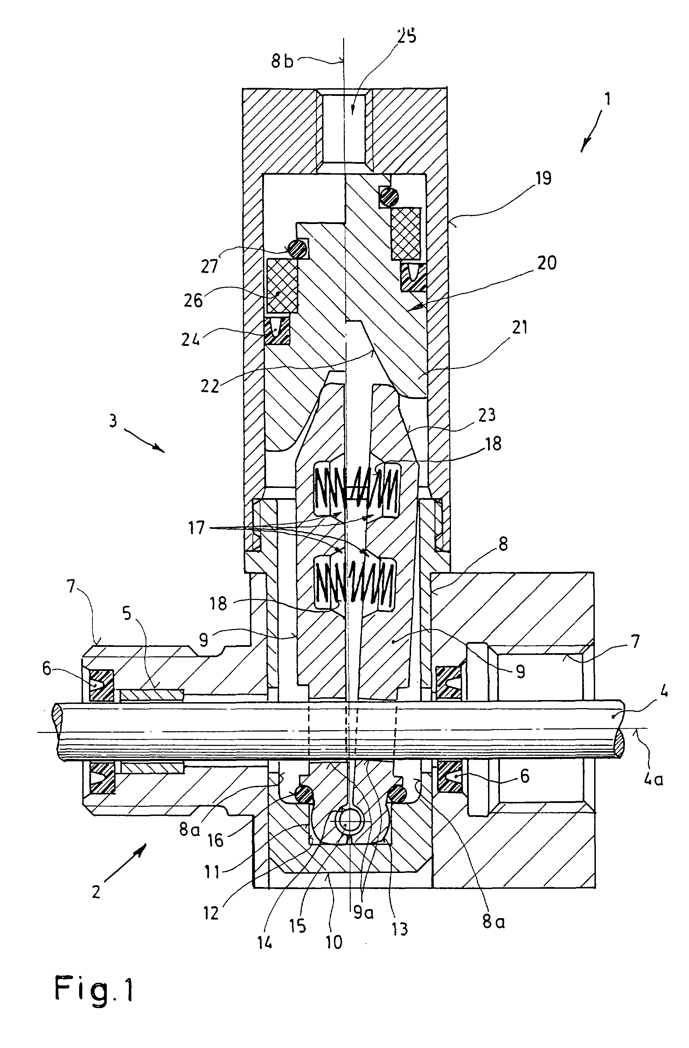

Fig. 1 zeigt eine Führungsvorrichtung 2 und eine Feststellvorrichtung 3 einer Linearbewegungseinheit 1 die entlang einer Stange 4 bzw. einer Stangenachse 4a bewegbar ist. Die Stange 4 erstreckt sich durch mindestens ein Gleitlager 5 und zwei Dichtungen 6 der Führungsvorrichtung 3, an welcher beidseits Verbindungsbereiche 7 vorgesehen sind.

Die Feststellvorrichtung 3 umfasst zumindest eine in die Führungsvorrichtung 2 einsetzbare Halterung, insbesondere eine zylindrische Hülse 8 mit einer Hülsenachse 8b in der zwei, vorzugsweise zumindest teilweise halbzylinderförmige, Klemmglieder 9 schwenkbar gelagert sind. Die Hülse 8 bzw. die Klemmglieder 9 weisen Durchgangsöffnungen 8a bzw. Klemmöffnungen 9a zum Durchführen der Stange 4 auf. Dabei sind die Klemmöffnungen 9a so an den Querschnitt der Stange 4 angepasst, dass sie in einer ersten Stellung jedes Klemmgliedes 9 klemmend an der Stange 4 sitzen und in einer zweiten Stellung die Stange 4 freibeweglich aufnehmen. Das in der Zeichnung rechts angeordnete Klemmglied 9 ist in der ersten Stellung dargestellt. Das in der Zeichnung links angeordnete Klemmglied 9 ist in der zweiten Stellung dargestellt.

Die Schwenkbewegung zwischen den beiden Stellungen wird durch die Lagerung der beiden Klemmglieder 9 in der Hülse 8 und von der durch die Klemmöffnungen 9a verlaufende Stange 4 geführt. Die Hülse 8 hat vorzugsweise am einen Ende einen Abschlussbereich 10 mit einer Führungsausnehmung 11, die vorzugsweise als zylindrische Bohrung entlang der Hülsenachse 8b ausgebildet ist und, im besondern, zumindest teilweise als zweite Führungsfläche 12 dient. Die Klemmglieder 9 sind mit einem Führungsende in die Führungsausnehmung 11 eingeführt und haben dort je eine teilkugelförmige, insbesondere erste Führungsfläche 13. Die Führungsausnehmung 11 könnte auch mit einem im wesentlichen rechteckigen Querschnitt ausgeführt sein und entsprechend wären die ersten Führungsflächen teilzylinderförmig mit Zylinderachsen fluchtend mit den Schwenkachsen.

Im Bereich der Führungsenden sind an den Klemmgliedern 9 einander zugewandte, z.B. dritte, Führungsflächen 14 ausgebildet. Um die Klemmglieder 9 in ihrer Längsrichtung unversetzt nebeneinander anzuordnen, ist ein fluchtend zu den Schwenkachsen verlaufender Stift 15 im Bereich der dritten Führungsflächen 14 an diese anliegend angeordnet. Die Führungsenden und der Stift 15 sind so dimensioniert, dass sie im wesentlichen spielfrei in die Führungsausnehmung 11 passen. Damit die Klemmglieder 9 zusammenbleiben, ist gegebenenfalls ein elastischer Ring 16 vorgesehen, der sich vorzugsweise zwischen den Führungsflächen 13, 14 und den Klemmöffnungen 9a um beide Klemmglieder 9 erstreckt. Es versteht sich von selbst, dass anstelle des Stiftes 15 und des elastischen Ringes 16 zwischen den beiden Klemmgliedern 9 im Bereich des Führungsendes ein Schwenkgelenk vorgesehen werden könnte. Gegebenenfalls wird nur ein Paar von Führungsflächen 12, 13 bzw. 14, 15 verwendet.

Um die Klemmglieder 9 in eine erste Stellung bzw. in eine Klemmstellung zu pressen, ist mindestens eine Pressvorrichtung zum Auseinanderpressen der Klemmglieder 9 vorgesehen. Die Pressvorrichtung umfasst in den beiden Klemmgliedern einander zugeordnete Ausnehmungen 17 und darin eingesetzte Federelemente, vorzugsweise Schraubenfedern 18. Indem die Federelemente 18 weiter von den Schwenkachsen bzw. vom Stift 15 entfernt angeordnet sind als die Klemmöffnungen 9a, kann eine grosse Klemmkraft erzielt werden. Die Schwenkbewegung nach aussen ist durch die Hülse 8 begrenzt.

Am offenen Ende der Hülse 8 schliesst ein Betätigungszylinder 19 mit einem Betätigungsorgan, zum Zusammenpressen der Klemmglieder 9 gegen die Kraft der Federn 18, an. Die Verbindung zwischen der Hülse 8 und dem Betätigungszylinder 19 ist als Schraubverbindung, gegebenenfalls aber als einrastende Steckverbindung, ausgebildet. Das Betätigungsorgan ist vorzugsweise ein Kolbenelement 20, das mit mindestens einem, vorzugsweise aber mit zwei vorstehenden Betätigungsvorsprüngen 21, bei einer Bewegung auf die freien Enden der Klemmglieder zu, diese betätigbar bzw. schwenkbar macht. In der dargestellten Ausführungsform umfassen die Betätigungsvorsprünge 21 erste Betätigungsflächen 22 die auf entsprechende zweite Betätigungsflächen 23 der Klemmglieder 9 wirken. Um eine gute Betätigung zu gewährleisten, haben die Betätigungsflächen 22, 23 zur Hülsenachse 8b geneigte Kontaktlinien bzw. Kontaktbereiche.

Indem die Federn 18 zusammengedrückt und die Klemmglieder 9 aufeinander zu bewegt werden, wird die Stange 4 von den Klemmflächen der Klemmöffnungen 9a freigegeben. Gegebenenfalls werden diese Klemmflächen aber etwa so ausgbildet, dass die Freigabe des Stabes bei voneinander weggeschwenkten Klemmgliedern 9 erfolgt und entsprechend die Klemmung unter der Kraft des auf die freien Enden der Klemmglieder 9 wirkenden Kolbenelementes 20 erfolgt. Auf jeden Fall gewährleistet die Anordnung der Führungsflächen 12, 13 und 14, 15, dass die Klemmflächen der Klemmöffnungen 9a gleichzeitig auf die Stange 4 wirken. Längsverschiebungen oder asymmetrische Bewegungen der Klemmglieder 9, welche zum Festsetzen anfänglich eines einzelnen Klemmgliedes 9 und anschliessend des anderen Klemmgliedes führen könnten, werden verhindert, so dass die Linearbewegungseinheit 1 nicht über eine gewünschte Position hinausstottert.

In der dargestellten Ausführungsform ist das Kolbenelement 20 mit einem Fluid, insbesondere mit Druckluft betätigbar. Dazu umfasst der scheibenförmige Teilbereich mindestens einen Dichtungsring 24 oder eine andere Dichtungsanordnung und der Betätigungszylinder 19 einen Fluidanschluss 25. Der Fluidanschluss 25 ist gegebenenfalls in einem vom Betätigungszylinder 19 trennbaren Zylinderdeckel angebracht, so dass das Kolbenelement 20 bei offenem Zylinderdeckel eingesetzt und/oder ausgerichtet werden kann. Die Ausrichtung, gegebenenfalls aber eine Ausrichtungshilfe, muss so gewählt werden, dass die Betätigungsflächen 22, 23 aneinander anschliessen. Gegebenenfalls sind die Betätigungsflächen so ausgebildet, dass sich das Kolbenelement 20 zwangsläufig richtig ausrichtet. Die Rückstellung des Kolbenelementes 20 kann sowohl passiv durch eine von den Federelementen 18 ausgehende Bewegung der Klemmglieder, oder durch eine aktiv Veränderung des Fluiddruckes erzielt werden.

Um die Position des Kolbenelementes 20 erfassen zu können, ist eine Anzeigeeinrichtung, insbesondere ein von aussen detektierbarer Ring 26, z.B. aus magnetischem Material, um das Kolbenelement 20 angeordnet. Alternativ ist der Zylinder 19 aus transparentem Material. Der Ring 26 wird zwischen der Dichtung 24 und einem in eine Nut eingelegten elastischen Haltering 27 gehalten. Es versteht sich von selbst, dass alle bekannten Betätigungsanordnungen zum kontrollierten Zusammenpressen der Klemmglieder 9 verwendet werden können. Es ist gegebenenfalls auch zweckmässig, dass das Betätigungsmittel die Klemmglieder 9 in die erste Stellung schwenkbar macht und die Bewegung in die zweite Stellung von einem Rückstellmittel oder auch vom Betätigungsmittel ausgeht.

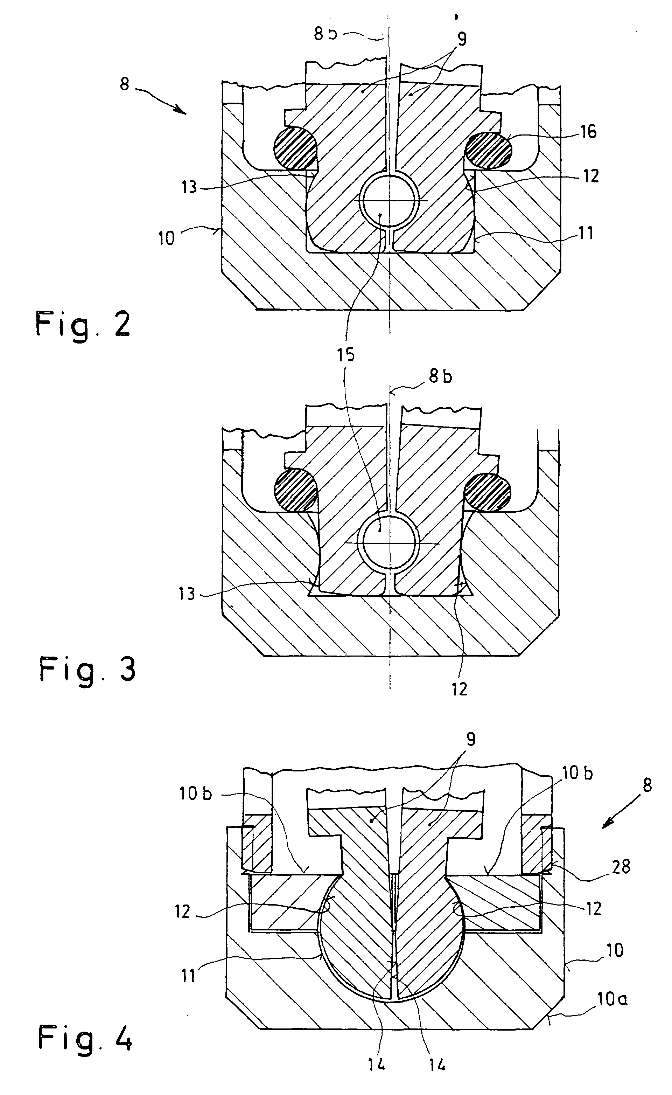

Fig. 2 zeigt den Abschlussbereich 10 der Hülse 8 mit der Führungsausnehmung 11 und den darin angeordneten Führungsenden der Klemmglieder 9. Die zweite Führungsfläche 12 ist als Zylindermantelfläche um die Hülsenachse 8b angeordnet. Die erste Führungsfläche 13 jedes Klemmgliedes 9 umfasst je eine Kugelteilfläche. Nach dem Einsetzen der Klemmglieder 9 mit dem elastischen Ring 16 und dem Stift 15, werden diese so ausgerichtet, dass die Führungsstange durch die Klemmöffnungen 9a gestossen werden kann.

Fig. 3 zeigt eine Lösung bei der die zweite Führungsfläche 12 in einer Ebene quer zur Schwenkachse gekrümmt ist. Vorzugsweise ist die zweite Führungsfläche 12 teilzylinderförmig mit einer Achse parallel zu den Schwenkachsen. Die Führungsenden der Klemmglieder 9 haben entsprechend einen rechteckigen Querschnitt, vorzugsweise ebene erste Führungsflächen 13 und können nur so in die Führungsausnehmung 11 gesteckt werden, dass die Klemmöffnungen 9a richtig ausgerichtet sind. Gegebenenfalls sind die ersten und zweiten Führungsflächen 12, 13 aber um die Hülsenachse 8b rotationssymmetrisch ausgebildet.

Fig. 4 zeigt eine kugelgelenkartige Lagerung der Klemmglieder 9. Der Abschlussbereich 10 der Hülse 8 mit der Führungsausnehmung 11 ist vom Zylindermantel trennbar ausgebildet, bzw. mit diesem über ein Gewinde 28 verbindbar. Um die Führungsenden der Klemmglieder 9 mit den teilkugelförmigen ersten Führungsflächen 13 in die Ausnehmung 11 einzusetzen, ist der Abschlussbereich 10 etwa dreiteilig ausgebildet. Ein Verschlussteil 10a umfasst einen Teil des Gewindes 28 und eine im wesentlichen halbkugelfömige Innenfläche. Die Führungsenden der Klemmglieder 9 werden mit je einem halbscheibenförmigen Festklemmteil 10b in eine zylindrische Bohrung im Verschlussteil 10a eingesetzt. Die zweite Führungsfläche 12 wird nun von den teilkugelförmigen Flächen der beiden Festklemmteile 10b und des Verschlussteiles gebildet. Die beschriebene Schwenklagerung hält die Klemmglieder 9 zusammen, so dass auf auf einen Stift und einen elastischen Ring verzichtet werden kann.

Die dritten Führungsflächen bestehen vorzugsweise je aus zwei ebenen Teilflächen, die so ausgebildet sind, dass die beiden Klemmglieder 9 lediglich im Bereich der Schwenkachsen aneinander anliegen. Es versteht sich von selbst, dass anstelle einer kugelgelenkartigen Lagerung auch eine zylindergelenkartige Lagerung vorgesehen werden kann, wobei dann die ersten und zweiten Führungsflächen 12, 13 zylinderteilförmig sind mit einer Achse fluchtend zu den Schwenkachsen.

## Patentansprüche

1. Feststellvorrichtung für eine Linearbewegungseinheit, die entlang mindestens einer Führungsstange (4) verfahrbar gelagert ist, mit zwei von der Führungsstange (4) im Bereich von Klemmöffnungen (9a) durchsetzten Klemmgliedern (9), die je zwischen einer ersten und einer zweiten Stellung schwenkbar sind, wobei sie in der ersten Stellung reibungsschlüssig mit der Führungsstange (4) in Eingriff stehen und in der zweiten Stellung lose auf der Führungsstange (4) verschieblich sind, **dadurch gekennzeichnet, dass**, im Bereich einer Schwenkachse, zum Führen der Schwenkbewegungen erste Führungsflächen (13) der Klemmglieder (9) mit zweiten Führungsflächen (12) einer die Klemmglieder (9) zumindest teilweise aufnehmenden Halterung zusammenwirken, wobei für die Schwenkbewegung jedes Klemmgliedes (9) mindestens eine in einer Schnittebene quer zur Schwenkachse gekrümmte Führungsfläche (12,13) so vorgesehen ist, dass die einander zugeordneten ersten und zweiten Führungsflächen (13,12) im wesentlichen spielfreie Schwenkbewegungen der Klemmglieder (9) führen.

2. Feststellvorrichtung nach Anspruch 1, **dadurch gekennzeichnet, dass** mindestens eine gekrümmte Führungsfläche (12,13) in einer Schnittebene quer zur Schwenkachse kreissegmentförmig ausgebildet ist.

3. Feststellvorrichtung nach Anspruch 1 oder 2, **dadurch gekennzeichnet, dass** mindestens eine Führungsfläche (12,13) teilkugelförmig ausgebildet ist.

4. Feststellvorrichtung nach Anspruch 3, **dadurch gekennzeichnet, dass** zwei einander zugeordnete Führungsflächen (12,13) einander entsprechend teilkugelförmig ausgebildet sind.

5. Feststellvorrichtung nach Anspruch 1 oder 2, **dadurch gekennzeichnet, dass** mindestens eine Führungsfläche (12,13) teilzylinderförmig mit einer in Richtung der Schwenkachse verlaufenden Zylinderachse ausgebildet ist.

6. Feststellvorrichtung nach Anspruch 5, **dadurch gekennzeichnet, dass** zwei einander zugeordnete Führungsflächen (12,13) einander entsprechend teilzylinderförmig ausgebildet sind.

7. Feststellvorrichtung nach einem der Ansprüche 1 bis 6, **dadurch gekennzeichnet, dass** die einander zugewandten Seiten der zwei Klemmglieder (9) dritte Führungsflächen (14) umfassen und während der Schwenkbewegung direkt aneinander oder vorzugsweise an einem Zwischenteil, insbesondere einem parallel zu den Schwenkachsen der Klemmglieder (9) angeordneten Stift (15), anliegen.

8. Feststellvorrichtung nach einem der Ansprüche 1 bis 7, **dadurch gekennzeichnet, dass** die beiden Klemmglieder (9) von mindestens einem Federelement (18) in die erste Stellung, gegebenenfalls aber in die zweite Stellung, schwenkbar sind und ein Betätigungsmittel vorgesehen ist, das die Klemmglieder (9), vozugsweise entgegen der Federkraft, in die zweite Stellung, gegebenenfalls aber in die erste Stellung, schwenkbar macht.

9. Feststellvorrichtung nach Anspruch 8, **dadurch gekennzeichnet, dass** das Betätigungsmittel ein Kolbenelement (20) umfasst, das mit mindestens einem, vorzugsweise aber mit zwei vorstehenden Betätigungsvorsprüngen (21), bei einer Bewegung auf die freien Enden der Klemmglieder (9) zu, diese betätigbar bzw. schwenkbar macht.

10. Feststellvorrichtung nach einem der Ansprüche 1 bis 9, **dadurch gekennzeichnet, dass** die beiden Klemmglieder (9) von einem elastischen Ringelement (16) zusammengehalten werden.

## Claims

1. Clamping device for a linear moving unit which is mounted so as to be movable along at least one guide rod (4), comprising two clamping elements (9) which are in the area of clamping openings (9a) passed through by the guide rod (4) and pivotal between a respective first and second position whilst being non-frictionally engaged with the guide rod (4) in the first position and loosely transposable on the guide rod (4) in the second position, **characterised in that** for the purpose of guiding the pivotal movements first guide surfaces (13) of the clamping elements (9) co-operate in the area of a pivotal axis with second guide surfaces (12) of a support which at least partially accommodates the clamping elements (9), and for the pivotal movement of each clamping element (9) is provided at least one guide surface, which is in an intersecting plane curved transversely to the pivotal axis, in such a manner that associated first and second guide surfaces (13, 12) guide essentially playfree pivotal movements of the clamping elements (9).

2. Clamping device according to Claim 1, **characterised in that** at least one curved guide surface (12, 13) is established in a circular segmented form in an intersecting plane transversely to the pivotal axis.

3. Clamping device according to Claim 1 or 2, **characterised in that** at least one guide surface (12, 13) is designed to be partially ballshaped.

4. Clamping device according to Claim 3, **characterised in that** two guide surfaces (12, 13) which are associated to each other are correspondingly partially ballshaped.

5. Clamping device according to Claim 1 or 2, **characterised in that** at least one guide surface (12, 13) is partially cylindrically shaped with a cylinder axis extending in the direction of the pivotal axis.

6. Clamping device according to Claim 5, **characterised in that** two guide surfaces (12, 13) which are associated with each other are of partially cylindrical design to correspond with each other.

7. Clamping device according to one of Claims 1 to 6, **characterised in that** the sides of the two clamping elements (9) which are facing each other reach around third guide surfaces (14) and during the pivotal movement abut each other or preferably an intermediate part, in particular a pin (15) arranged parallel to the pivotal axes of the clamping elements (9).

8. Clamping device according to one of Claims 1 to 7, **characterised in that** the two clamping elements (9) are pivotal by at least one spring element (18) into the first position, if appropriate into the second position, and an operating means is provided which makes the clamping elements (9) pivotal, preferably against the springload, into the second position, however into the first position if appropriate.

9. Clamping device according to Claim 8, **characterised in that** the operating means reaches around a piston element (20) which makes them operable or pivotal with at least one, preferably two protruding operating protrusions (21), during a movement towards the free ends of the clamping elements (9).

10. Clamping device according to one of Claims 1 to 9, **characterised in that** the two clamping elements are held together by an elastic circular element (16).

## Revendications

1. Dispositif de fixation pour une unité de mouvement linéaire qui est montée mobile le long d'au moins une barre conductrice (4), comportant deux organes de serrage (9) qui sont traversés par la barre conductrice (4) dans la zone d'ouvertures de serrage (9a) et qui sont pivotants chacun entre une première position et une deuxième position, étant en prise par frottement avec la barre conductrice (4) lorsqu'ils sont dans leur première position et étant mobiles librement sur la barre conductrice (4) lorsqu'ils sont dans leur deuxième position, **caractérisé en ce que,** dans la zone d'un axe de pivotement, pour guider les mouvements pivotants, des premières surfaces de guidage (13) des organes de serrage (9) coopèrent avec des deuxièmes surfaces de guidage (12) d'une fixation logeant au moins partiellement les organes de serrage (9), au moins une surface de guidage (12, 13) recourbée dans un plan de coupe transversalement par rapport à l'axe de pivotement étant prévue pour le mouvement pivotant de chaque organe de serrage (9) de telle sorte que les première et deuxième surfaces de guidage (13, 12) associées l'une à l'autre guident des mouvements pivotants des organes de serrage (9) globalement sans jeu.

2. Dispositif de fixation selon la revendication 1, **caractérisé en ce qu'**au moins une surface de guidage recourbée (12, 13) est conçue en forme de segment de cercle dans un plan de coupe transversalement par rapport à l'axe de pivotement.

3. Dispositif de fixation selon la revendication 1 ou 2, **caractérisé en ce qu'**au moins une surface de guidage (12, 13) est conçue en forme de sphère partielle.

4. Dispositif de fixation selon la revendication 3, **caractérisé en ce que** deux surfaces de guidage (12, 13) associées l'une à l'autre sont conçues en forme de sphères partielles correspondant l'une à l'autre.

5. Dispositif de fixation selon la revendication 1 ou 2, **caractérisé en ce qu'**au moins une surface de guidage (12, 13) est conçue en forme de cylindre partiel avec un axe de cylindre s'étendant dans la direction de l'axe de pivotement.

6. Dispositif de fixation selon la revendication 5, **caractérisé en ce que** deux surfaces de guidage (12, 13) associées l'une à l'autre sont conçues en forme de cylindres partiels correspondant l'un à l'autre.

7. Dispositif de fixation selon l'une quelconque des revendications 1 à 6, **caractérisé en ce que** les côtés tournés l'un vers l'autre des deux organes de serrage (9) comprennent des troisièmes surfaces de guidage (14) et, pendant le mouvement pivotant, s'appuient directement l'un contre l'autre ou de préférence contre une pièce intermédiaire, notamment contre une broche (15) disposée parallèlement aux axes de pivotement des organes de serrage (9).

8. Dispositif de fixation selon l'une quelconque des revendications 1 à 7, **caractérisé en ce que** les deux organes de serrage (9) peuvent pivoter sous l'action d'au moins un élément formant ressort (18) dans la première position, mais le cas échéant dans la deuxième position, et **en ce qu'**il est prévu un moyen d'actionnement qui rend les organes de serrage (9) pivotants, de préférence à l'encontre de la force de ressort, dans la deuxième position, mais le cas échéant dans la première position.

9. Dispositif de fixation selon la revendication 8, **caractérisé en ce que** le moyen d'actionnement comprend un élément formant piston (20) qui, avec au moins une, mais de préférence deux, parties en saillie d'actionnement (21) qui dépassent, lors d'un mouvement vers les extrémités libres des organes de serrage (9), rend ceux-ci actionnables c'est-à-dire pivotants.

10. Dispositif de fixation selon l'une quelconque des revendications 1 à 9, **caractérisé en ce que** les deux organes de serrage (9) sont tenus ensemble par un élément annulaire (16) élastique.
